# FASCICULE DE BREVET EUROPEEN

(11) **EP 3 342 574 B1**
(45) Date de publication et mention de la délivrance du brevet: **18.09.2019**
(21) Numéro de dépôt: 17020105.7
(22) Date de dépôt: 16.03.2017
(51) Int. Cl.: B29C 45/17, B66C 1/66, B29C 31/00

(54) **DISPOSITIF POUR LA MANUTENTION D'UN MOULE**
VORRICHTUNG ZUR BEFÖRDERUNG EINER FORM
DEVICE FOR HANDLING A MOULD

(43) Date de publication de la demande: 04.07.2018
(73) Titulaire: Rodrigues da Costa, José, 3080-232 Figueira da Foz (PT)
(72) Inventeur: Rodrigues da Costa, José, 3080-232 Figueira da Foz (PT)
(74) Mandataire: Audusseau-Girardeau, Magaly

(56) Documents cités:
- DE-U1- 8 809 835
- FR-A1- 2 324 440
- FR-A1- 2 808 232
- US-A- 5 033 784

## Description

L'invention a trait à la manutention de moules, pour la fabrication de pièces par injection de matière plastique ou de Zamac dans un moule.

Elle concerne, par ailleurs, des perfectionnements apportés dans ce domaine.

Les moules sont grandement utilisés dans l'industrie : ils permettent la réalisation de pièces plastiques moulées (boucliers, planches de bord...) en grandes séries : Ils sont montés dans des installations qui assurent l'injection de matière dans le moule.

De tels moules doivent parfois être remplacés par d'autres moules. Leur manutention est spécifique et réglementée : en effet, le poids et l'encombrement de tels moules rendent difficile leur déplacement.

Pour permettre la manutention de tels moules, des installations ont été inventées, mettant en oeuvre des ponts sur lesquels se déplacent des équipements mobiles auxquels on relie les moules via des systèmes d'élingues de levage. Pour accrocher les élingues de levage au moule à déplacer, on équipe le moule de plusieurs anneaux de levage à différents endroits du moule. Une fois les anneaux fixés au moule et les élingues fixés aux anneaux, on commande la levée et le déplacement du moule au moyen des équipements mobiles.

A ce jour, ce procédé est le plus utilisé au monde mais il reste extrêmement dangereux car il implique des risques de chute d'un ouvrier qui doit fixer les élingues de levage aux anneaux ou les décrocher.

On connait du document FR 2 324 440 un dispositif pour la manutention d'un moule tel que défini dans le préambule de la revendication 1.

L'invention propose un dispositif de manutention qui permet de s'affranchir de toute opération manuelle d'accrochage et de décrochage d'élingues dans des anneaux de levage des moules.

L'invention vise à offrir une alternative permettant la manutention des moules d'injection de façon sécurisée pour les ouvriers et de façon plus rapide, en supprimant notamment l'utilisation d'élingues et d'anneaux de levage.

Elle propose, à cet effet, un dispositif pour la manutention d'un moule, tel que défini par la revendication 1.

Le dispositif, conforme à l'invention, peut également comporter les caractéristiques suivantes, prises séparément ou en combinaison :
- ledit dispositif de commande peut être mobile en déplacement entre une première position et une seconde position, et l'organe de raccordement peut être relié mécaniquement au dispositif de commande et, enfin, le dispositif peut également être mobile en déplacement entre ladite première position et ladite seconde position, ladite première position étant associée à la position de verrouillage de l'organe de verrouillage et ladite seconde position étant associée à la position de déverrouillage de l'organe de verrouillage ;
- . chacun desdits éléments formant mâchoire peut être relié au dispositif de commande par une biellette ;
- l'organe de raccordement au pont de levage est un bras et le dispositif peut comporter au moins une bielle présentant une première extrémité de bielle et une seconde extrémité de bielle, ladite première extrémité de bielle étant reliée audit bras et ladite seconde extrémité de bielle étant reliée au dispositif de commande ;
- le dispositif peut comporter deux bielles, chacune des deux dites bielles étant reliée par une première extrémité de bielle à une extrémité dudit bras et par une seconde extrémité de bielle au dispositif de commande.

L'invention concerne également un ensemble pour la manutention d'un moule d'injection de matière plastique, comprenant :
- un dispositif de manutention, tel que défini ci-dessus, et
- un élément à fixer sur un moule.

L'ensemble conforme à l'invention peut également comporter les caractéristiques suivantes, prises séparément ou en combinaison :
- ledit élément à fixer sur un moule est un plot comprenant un pied de fixation apte à être fixé sur ledit moule, un corps de plot et une tête de plot,
- la tête de plot peut présenter une section transversale de tête et le corps dudit plot peut présenter une section transversale de corps, la section transversale de tête étant plus grande que la section transversale de corps de plot de sorte que le plot présente un épaulement entre la tête de plot et le corps de plot ;
- l'ouverture de la base du dispositif de manutention présente une forme d'ouverture et la forme d'ouverture est complémentaire à la forme de ladite tête de plot.

Enfin, l'invention concerne une installation pour la manutention d'au moins un moule d'injection de matière plastique, remarquable en ce qu'elle comporte un ensemble, tel que défini ci-dessus, ainsi qu'un pont de levage.

Suivant un mode de réalisation avantageux de l'installation conforme à l'invention, l'organe de raccordement du dispositif de manutention peut être monté sur ledit pont de levage.

Suivant encore une autre particularité de l'installation conforme à l'invention, le pont de levage est un pont roulant.

Pour pouvoir être exécutée, l'invention est exposée de façon suffisamment claire et complète dans la description suivante qui est, en plus, accompagnée de dessins dans lesquels :
- La figure 1 est une première vue de côté d'un dispositif pour la manutention d'un moule d'injection, conforme à l'invention,
- La figure 2 est une vue de coupe suivant le plan A-A du dispositif montré en figure 1,
- La figure 3 est une seconde vue de côté du dispositif montré en figure 1
- La figure 4 est une vue en coupe suivant le plan B-B du dispositif montré en figure 3,
- La figure 5 est une première vue en perspective du dispositif montré en figure 1
- La figure 6 est une autre vue en perspective du dispositif montré en figure 1
- La figure 7 est une vue en perspective d'un élément de fixation selon un premier mode de réalisation d'un ensemble conforme à l'invention,
- La figure 8 est une vue en perspective d'un élément de fixation selon un second mode de réalisation d'un ensemble conforme à l'invention,
- La figure 9 est une vue en coupe axiale d'un ensemble conforme à un premier mode de réalisation, montrant l'élément de fixation de la figure 7 en prise dans le dispositif montré sur les figures 1 à 6,
- La figure 10 est une vue en coupe axiale du dispositif montré sur les figures 1 à 6, montrant l'organe de verrouillage du dispositif en position de déverrouillage,
- Et la figure 11 est une vue en coupe axiale du dispositif montré sur les figures 1 à 6, montrant l'organe de verrouillage du dispositif en position de verrouillage.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

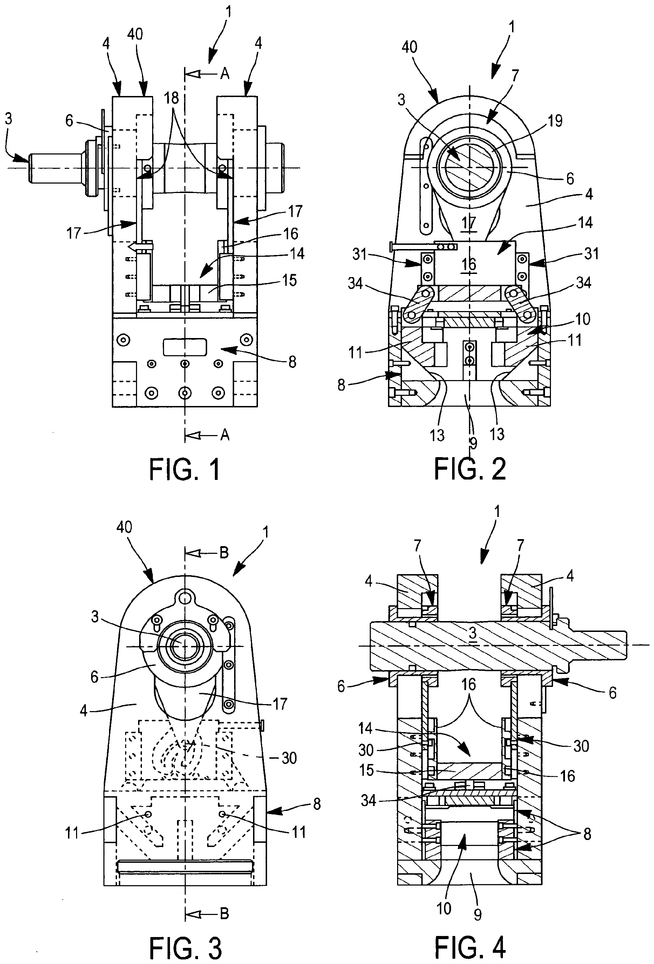

Il sera fait référence, dans un premier temps, au dispositif pour la manutention d'un moule en faisant référence aux figures 1 à 6.

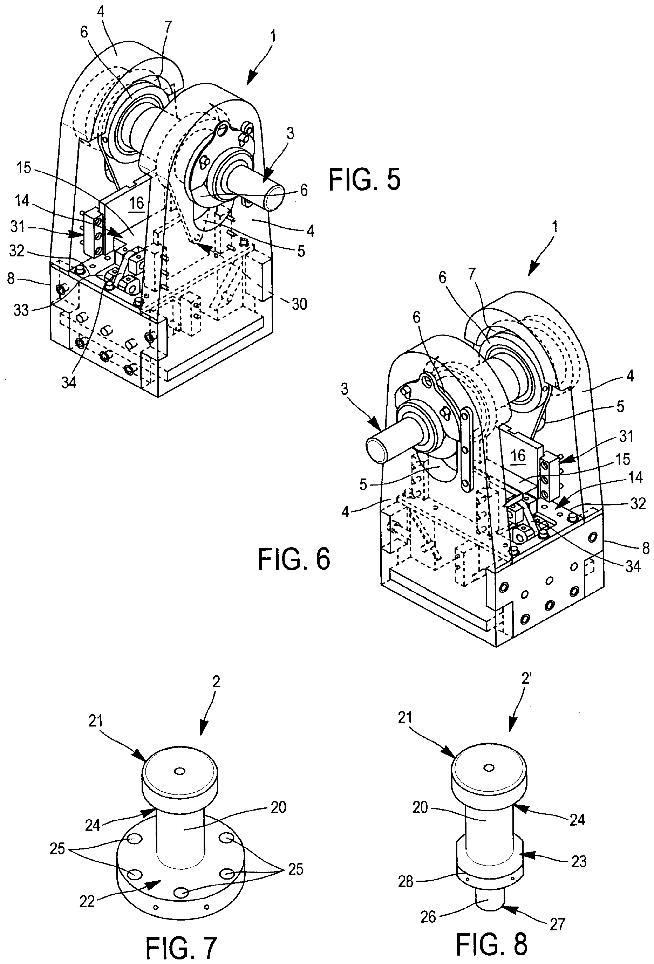

Puis, seront décrits deux modes de réalisation d'un élément de fixation pour la réalisation d'un ensemble conforme à l'invention, en faisant référence aux figures 7 et 8.

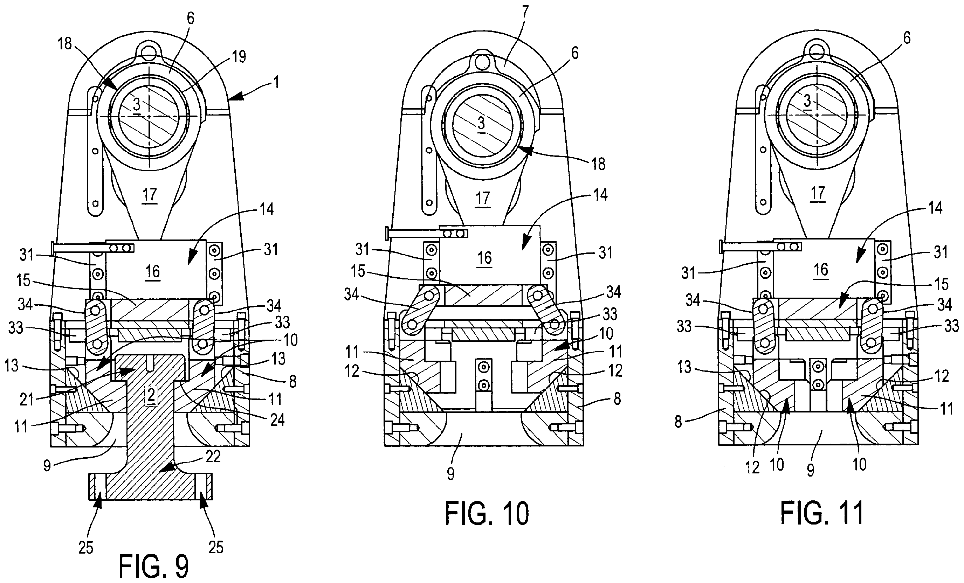

Enfin, il sera décrit un procédé de mise en oeuvre de l'ensemble conforme à l'invention en faisant référence aux figures 9 à 11.

La figure 1 montre un dispositif 1 conçu pour la manutention d'un moule, en particulier un moule pour la réalisation d'une pièce plastique par injection de matière.

Le dispositif 1 est conçu pour se fixer sur un pont roulant. Il permet de saisir un moule afin de le déplacer d'un endroit à un autre, la saisie du moule se faisant en associant le dispositif 1 à un élément 2 (ou 2') qui est à fixer sur un moule, et en particulier au plus proche du centre de gravité du moule.

Un premier exemple de réalisation d'un élément 2 conforme à l'invention est montré en figure 7.

Un second exemple de réalisation d'un élément 2' à fixer sur un moule, conforme à l'invention, est montré en figure 8.

Chacun des éléments 2 et 2' est un plot (2 ou 2') qui comporte un corps 20, une tête 21 et un pied 22 (pour l'élément 2) ou 23 (pour l'élément 2'). Le corps 20 est de forme sensiblement cylindrique. La tête 21 est également de forme sensiblement cylindrique mais elle présente une section transversale de tête qui est plus grande que la section transversale du corps 20. Ainsi, l'élément (ou le plot) 2 ou 2' comporte un épaulement 24 entre la tête de plot 21 et le corps de plot 20.

La présence de cet épaulement 24 permet la préhension du plot 2 ou 2' par le dispositif de manutention 1 en saisissant le plot sous sa tête 21.

On notera que les deux éléments 2 et 2' ne diffèrent que par leur pied de fixation : le pied 22 est réalisé par un disque coaxial et solidaire au corps 20. Le pied 22 comporte six trous traversants 25 qui permettent de fixer le pied par vissage, en rapportant et en vissant une vis dans chacun des trous traversants 25 et dans des trous taraudés ménagés dans le moule (dans lequel le pied 22 est fixé).

Le pied 23 du plot 2 est réalisé par une tige 26 qui prolonge le corps 20, coaxiale au corps, et qui présente un filetage externe 27 afin de permettre le vissage du pied 23 directement dans un trou taraudé du moule.

Une partie 28 du pied 23, située entre le corps 20 et la tige de prolongement 26, présente un diamètre plus important de manière à former butée 28 et empêcher le vissage du plot 2' au-delà d'une certaine profondeur de vissage atteinte.

On prévoit de fixer les plots 2 et 2' sur une partie du moule située dans l'axe du centre de gravité du moule.

Il va maintenant être fait référence au dispositif 1.

Pour pouvoir être fixé sur un pont roulant, le dispositif 1 comporte un organe de raccordement 3 : il s'agit d'un bras 3 transversal au dispositif.

Plus précisément, le dispositif de manutention 1 comporte deux parois 4 verticales et symétriques : les parois 4 sont sensiblement en forme de trapèze, avec un côté 40 plus étroit orienté vers le haut et un côté 41 plus large en bas. Le côté 40 est sensiblement en forme d'arc de cercle, tandis que le côté 41 est sensiblement droit.

Chaque paroi 4 est traversée par une ouverture 5 de forme oblongue et les deux ouvertures 5 se font face : le bras 3 traverse les ouvertures oblongues 5 et est maintenu en position dans une partie de la forme grâce à des pièces 6 en forme de bague qui sont emmanchées à la fois autour du bras et dans un logement 7 de la paroi 4 au voisinage d'un extrémité de l'ouverture 5 de forme oblongue.

Il sera noté que le logement 7 accueillant les pièces 6 de positionnement du bras est de diamètre plus large que les pièces 6 en forme de bague, de sorte que les pièces 6 emmanchées autour du bras 3 peuvent se mouvoir dans l'espace défini par la partie 7.

Ainsi, le bras 3 (et donc l'organe de raccordement qu'il constitue) est monté mobile dans le dispositif entre une première position (position haute montrée en figures 9 et 11) et une seconde position (position basse montrée en figure 10).

Les deux parois 4 sont fixées de part et d'autre d'une base 8 du dispositif 1.

La base 8 a pour fonction de saisir fermement l'élément 2 (ou 2') à fixer sur un moule, de manière à solidariser le moule au dispositif de manutention 1.

Pour ce faire, la base 8 comporte, conformément à l'invention, une ouverture centrale 9 dont l'entrée se trouve sous la base 8. Les dimensions et la forme de l'ouverture 9 sont telles qu'elle livre aisément passage à au moins une partie de l'élément 2 (ou 2').

On notera sur les figures 9 à 11 que l'ouverture présente une paroi interne de forme courbe et convexe pour guider la tête de l'élément 2 jusqu'aux moyens de verrouillage que comporte l'invention.

L'ouverture centrale 9 peut présenter une forme complémentaire à celle de l'élément 2 (ou 2') de manière à guider l'introduction de la tête de l'élément dans la base.

Pour fixer au moins partiellement l'élément 2 (ou 2') dans le dispositif 1 de manutention, et en particulier dans la base 8, cette dernière comporte également des moyens de fixation ou de libération qui peuvent être actionnés mécaniquement.

Les moyens de fixation ou de libération sont réalisés par un organe de verrouillage 10 qui est montré plus précisément en figures 9 à 11.

L'organe de verrouillage 10 est mobile entre :
- une position de verrouillage, suivant laquelle l'élément 2 (ou 2') est en prise avec l'organe (il est ainsi rendu solidaire en mouvement avec le dispositif de manutention 1 - voir figures 9 et 11), et
- une position de déverrouillage, suivant laquelle l'élément 2 (ou 2') est libre de se déplacer dans l'ouverture 9 de la base (l'élément 2 et le dispositif 1 sont alors dissociés / indépendants mécaniquement - voir figure 10).

Plus précisément encore, l'organe de verrouillage est réalisé par au moins deux éléments 11 formant une mâchoire capable de s'ouvrir ou de se fermer. Les deux éléments 11 présentent chacun un pan incliné 12 capable de glisser par gravité sur un pan incliné 13 de la base 8 sur lequel chaque pan incliné 12 repose. Ainsi, lorsque les éléments 11 se trouvent en partie basse du pan incliné 13, ils sont en position rapprochée l'un de l'autre et peuvent assurer un verrouillage de l'élément de fixation 2 (ou 2' - voir figure 9) en se positionnant sous la tête de plot 21, dans l'épaulement 24. Quand les éléments 11 se trouvent en partie haute des pans inclinés 13, ils se trouvent dans une position écartée l'un de l'autre et livrent passage à l'élément 2 (ou permettent la libération de l'élément 2 - voir figure 10) : ils se trouvent ainsi en position de déverrouillage.

Conformément à l'invention, la commande de l'organe de verrouillage 10 se fait par un dispositif de commande 14.

Le dispositif de commande 14 comporte, dans le cadre de cet exemple de réalisation, un plateau 15 sensiblement horizontal, placé perpendiculairement entre les deux parois 4, et deux pièces latérales 16 sensiblement rectangulaires, disposées perpendiculairement au plateau 15, les pièces latérales 16 et le plateau 15 formant un U et étant solidarisés ensemble.

Le dispositif de commande, ainsi réalisé, est relié au bras 3 par deux bielles 17 : chacune des bielles 17 comporte une première 18 extrémité présentant une ouverture traversante 19 emmanchée autour d'une extrémité du bras au voisinage d'une paroi 4. Chaque bielle comporte également une seconde extrémité 30 montée pivotante autour de son axe sur une pièce latérale 16 (voir figure 5).

Ainsi réalisé, le dispositif de commande est relié au bras 3 mobile en déplacement vertical : le dispositif de commande 14 suit ainsi le mouvement du bras 3 et est ainsi également mobile en déplacement vertical entre une première position haute et une seconde position basse.

Le fait que les bielles 17 soient montées pivotantes autour du bras 3 et sur les pièces 16 permet de faire descendre le dispositif de commande 14 quand le dispositif de manutention 1 repose sur un support (par exemple un moule) : en forçant la descente du bras 3, les bielles 17 pivotent et permettent la remontée des mâchoires 11, et donc la libération du plot 2 ou 2' : c'est ainsi que le moule est libéré de son emprise avec le dispositif de manutention 1.

Le déplacement vertical du dispositif de commande 14 est guidé grâce à deux rails 31 fixés sur les faces internes de chaque paroi 4 et entourant les pièces latérales rectangulaires 16 du dispositif de commande 14 (voir figures 5 et 9 à 11, par exemple).

On notera que la base comporte une paroi sommitale 32, percée de deux ouvertures traversante 33, livrant passage à deux biellettes 34 permettant de relier le dispositif de commande 14 aux éléments 11 formant mâchoire.

Chacune des biellettes 34 est reliée, par une extrémité, au dispositif de commande 14 et par une autre extrémité à un élément 11 formant mâchoire.

C'est ainsi que le mouvement du dispositif de commande 14, lui-même induit par le mouvement du bras 3, entraîne en mouvement les éléments 11 format mâchoire : quand le dispositif de commande 14 descend, les biellettes 34 pivotent et forment un angle entre elles (figure 10), ce qui fait remonter les éléments 11 formant mâchoire sur les pans inclinés 12. Les éléments 11 s'écartent alors l'un de l'autre en position de déverrouillage. Quand le dispositif de commande monte, les biellettes 34 pivotent et se placent sensiblement parallèlement l'une à l'autre, sous l'action de la gravité des éléments formant mâchoire qui glissent par gravité sur les pans inclinés 13 de la base 8. Cette position sensiblement parallèle des biellettes 34 rapproche les éléments 11 formant mâchoire en position de verrouillage. On comprend ainsi que, en tirant vers le haut le bras 3 du dispositif de manutention 1, on commande le déplacement vers le haut du dispositif de commande 14 qui, lui-même, commande la position de verrouillage des éléments 11 autour de la tête du plot 2 ou 2'.

Il va maintenant être fait référence au procédé de fonctionnement du dispositif de manutention conforme à l'invention, mis en oeuvre dans une installation comportant un pont de levage.

De préférence, le pont de levage est un pont roulant, de sorte qu'il est aisé de déplacer le pont de levage et le dispositif de manutention 1.

Le dispositif de manutention 1 est fixé au pont de levage par son bras 3 de raccordement.

Pour déplacer un moule, on fixe tout d'abord un plot 2 ou 2' à une position sur le moule située au voisinage de son centre de gravité.

Le moule peut également être équipé dès sa fabrication du plot 2 ou 2'.

Pour déplacer le moule, il suffit alors d'amener le dispositif de manutention au-dessus du moule et de positionner le plot 2 ou 2' dans l'ouverture centrale 9 du dispositif manutention, en abaissant le dispositif de manutention 1.

En commandant la position basse du bras de raccordement (figure 10), les éléments formant mâchoire 11 s'écartent et libèrent le passage de l'ouverture centrale 9 de la base 8.

On insère alors le plot 2 ou 2' dans l'ouverture centrale 9.

En commandant la position haute du bras de raccordement (figure 9 ou 11), les éléments formant mâchoire 11 se rapprochent l'un de l'autre et viennent alors en prise sous la tête 21 du plot 2, en se positionnant contre l'épaulement 24.

On peut alors remontrer ou déplacer le dispositif de manutention qui est rendu solidaire du moule.

Pour libérer de nouveau le moule, il faut abaisser le bras 3 : quand le dispositif vient prendre appui sur le moule, le bras 3 est entraîné en position basse, ce qui assure l'abaissement du dispositif de commande et l'écartement des éléments 11 formant mâchoire, libérant ainsi la tête 21 du plot 2.

On comprend de ce qui précède comment l'invention permet de résoudre le problème à l'origine de l'invention : grâce au dispositif de manutention ainsi réalisé, il n'est plus nécessaire de faire intervenir un ouvrier pour accrocher ou décrocher manuellement des élingues. L'invention permet ainsi de supprimer des tâches dangereuses pour un ouvrier.

Il devra toutefois être compris que l'invention n'est pas limitée au mode de réalisation et de mise en oeuvre qui viennent d'être décrits : en effet, l'invention s'étend à la mise en oeuvre de tout moyen équivalent.

Par exemple, les éléments 11 assurant le verrouillage du plot 2 ou 2' dans la base du dispositif pourraient être en nombre différent : le dispositif pourrait en comporter plus de deux sans sortir du cadre de l'invention.

De même, la forme du pied des plots ou de la tête des plots pourrait être réalisée de façon différente. On comprend également que le choix du mode de fixation du pied dépend du poids du moule, de sa taille, de l'espace disponible dans le moule pour y solidariser le plot etc.

## Revendications

1. Dispositif pour la manutention d'un moule, notamment d'injection de pièce plastique, comportant :
- Un organe de raccordement (3), apte à être raccordé à un pont de levage,
- Une base de préhension (8), apte à saisir un élément (2, 2') fixé sur un moule, ladite base de préhension (8) comprenant :
∘ une ouverture centrale (9) apte à recevoir ledit élément (2, 2') fixé sur un moule, et
∘ un organe de verrouillage (10, 11), apte à verrouiller la position dudit élément (2, 2') dans la base de préhension (8), l'organe de verrouillage (10, 11) étant conçu pour adopter une position de verrouillage et une position de déverrouillage,
- et un dispositif de commande (14) pour commander le passage de l'organe de verrouillage (10, 11) de la position de verrouillage à la position de déverrouillage,
le dispositif comportant deux parois fixées de part et d'autre de ladite base de préhension, chaque paroi étant traversée par une ouverture de forme oblongue, les deux ouvertures de forme oblongue se faisant face,
et ledit organe de raccordement (3) étant un bras transversal qui traverse les ouvertures oblongues et qui est mobile en déplacement entre une première position et une seconde position dans lesdites ouvertures oblongues,
**caractérisé en ce que** l'organe de verrouillage (10, 11) comporte au moins deux éléments (11) formant mâchoire, les éléments (11) étant montés mobiles en déplacement entre :
- la position de verrouillage suivant laquelle les éléments mobiles (11) sont en position rapprochée l'un de l'autre, et
la position de déverrouillage où les éléments mobiles (11) sont en position écartée l'un de l'autre
et **en ce que** chacun desdits au moins deux éléments (11) formant mâchoire présente un pan incliné (12) apte à glisser par gravité sur un pan incliné (13) interne à la base de préhension du dispositif.

2. Dispositif, selon la revendication 1, **caractérisé**
- **en ce que** ledit dispositif de commande (14) est mobile en déplacement entre une première position et une seconde position,
- **en ce que** l'organe de raccordement (3) est relié mécaniquement au dispositif de commande (14),
- et **en ce que** ladite première position étant associée à la position de verrouillage de l'organe de verrouillage et ladite seconde position étant associée à la position de déverrouillage de l'organe de verrouillage.

3. Dispositif, selon la revendication 1 ou 2, **caractérisé en ce que** chacun desdits éléments (11), formant mâchoire, est relié au dispositif de commande (14) par une biellette (34).

4. Dispositif, selon l'une quelconque des revendications précédentes, **caractérisé en ce qu'**il comporte au moins une bielle (17) présentant une première extrémité de bielle (18) et une seconde extrémité de bielle (30), ladite première extrémité de bielle (18) étant reliée audit bras (3) et ladite seconde extrémité de bielle (30) étant reliée au dispositif de commande (14).

5. Dispositif, selon la revendication 4, **caractérisé en ce qu'**il comporte deux bielles (17), chacune des deux dites bielles (17) étant reliée par une première extrémité de bielle (18) à une extrémité dudit bras (3) et par une seconde extrémité de bielle (30) au dispositif de commande (14).

6. Ensemble pour la manutention d'un moule d'injection de matière plastique comprenant :
- un dispositif de manutention (1) selon l'une quelconque des revendications 1 à 5, et
- un élément (2, 2') à fixer sur un moule.

7. Ensemble, selon la revendication 6, **caractérisé en ce que** ledit élément (2, 2') à fixer sur un moule est un plot (2, 2') comprenant un pied de fixation (23 ; 23) apte à être fixé sur ledit moule, un corps de plot (20) et une tête de plot (21).

8. Ensemble, selon la revendication 7, **caractérisé en ce que** la tête de plot (21) présente une section transversale de tête et le corps (20) dudit plot présente une section transversale de corps, la section transversale de tête étant plus grande que la section transversale de corps de plot de sorte que le plot présente un épaulement (24) entre la tête de plot et le corps de plot.

9. Ensemble, selon la revendication 7 ou 8, **caractérisé en ce que** l'ouverture (9) de la base (8) du dispositif de manutention présente une forme d'ouverture et **en ce que** la forme d'ouverture est complémentaire à la forme de ladite tête de plot (21).

10. Installation pour la manutention d'au moins un moule d'injection de matière plastique, **caractérisée en ce qu'**elle comporte un ensemble selon l'une quelconque des revendications 6 à 9 ainsi qu'un pont de levage.

11. Installation, selon la revendication 10, **caractérisée en ce que** ledit organe de raccordement du dispositif de manutention est monté sur ledit pont de levage.

12. Installation, selon la revendication 10 ou 11, **caractérisé en ce que** le pont de levage est un pont roulant.

## Patentansprüche

1. Vorrichtung zur Handhabung einer Form, insbesondere zum Spritzgießen eines Kunststoffteils, Folgendes beinhaltend:
- Ein Anschlussorgan (3), das imstande ist, an eine Hebebühne angeschlossen zu werden,
- Eine Greifbasis (8), die imstande ist, ein Element (2, 2') zu ergreifen, das an einer Form befestigt ist, wobei die Greifbasis (8) Folgendes umfasst:
∘ eine zentrale Öffnung (9), die imstande ist, das an einer Form befestigte Element (2, 2') aufzunehmen, und
∘ ein Verriegelungsorgan (10, 11), das imstande ist, die Position des Elements (2, 2') in der Greifbasis (8) zu verriegeln, wobei das Verriegelungsorgan (10, 11) gestaltet ist, um eine Verriegelungsposition und eine Entriegelungsposition einzunehmen,
- und eine Steuerungsvorrichtung (14) zum Steuern des Übergangs des Verriegelungsorgans (10, 11) von der Verriegelungsposition in die Entriegelungsposition,
wobei die Vorrichtung zwei Wände beinhaltet, die beiderseits der Greifbasis befestigt sind, wobei jede Wand durch eine Öffnung in länglicher Form durchquert wird, wobei die beiden Öffnungen in länglicher Form einander gegenüberliegen,
und das Anschlussorgan (3) ein querlaufender Arm ist, der die länglichen Öffnungen durchquert und der zwischen einer ersten Position und einer zweiten Position in den länglichen Öffnungen verschiebbar mobil ist,
**dadurch gekennzeichnet, dass** das Verriegelungsorgan (10, 11) mindestens zwei Elemente (11) beinhaltet, die eine Klaue bilden, wobei die Elemente (11) verschiebbar mobil montiert sind zwischen:
- der Verriegelungsposition, in der die mobilen Elemente (11) in angenäherter Position zueinander sind, und
der Entriegelungsposition, wo die mobilen Elemente (11) in entfernter Position voneinander sind
und dadurch, dass jedes der mindestens zwei Elemente (11), die die Klaue bilden, eine schräge Fläche (12) aufweist, die imstande ist, durch Schwerkraft auf einer schrägen Fläche (13) innerhalb der Greifbasis der Vorrichtung zu gleiten.

2. Vorrichtung nach Anspruch 1, **dadurch gekennzeichnet,**
- **dass** die Steuerungsvorrichtung (14) zwischen einer ersten Position und einer zweiten Position verschiebbar mobil ist,
- **dass** das Anschlussorgan (3) mechanisch mit der Steuerungsvorrichtung (14) verbunden ist,
- und dadurch, dass die erste Position der Verriegelungsposition des Verriegelungsorgans zugeordnet ist, und die zweite Position der Entriegelungsposition des Verriegelungsorgans zugeordnet ist.

3. Vorrichtung ach Anspruch 1 oder 2, **dadurch gekennzeichnet, dass** jedes der Elemente (11), die die Klaue bilden, mit der Steuerungsvorrichtung (14) durch eine Steuerstange (34) verbunden ist.

4. Vorrichtung nach einem der vorstehenden Ansprüche, **dadurch gekennzeichnet, dass** sie mindestens eine Triebstange (17) beinhaltet, die ein erstes Triebstangenende (18) und ein zweites Triebstangenende (30) aufweist, wobei das erste Triebstangenende (18) mit dem Arm (3) verbunden ist und das zweite Triebstangenende (30) mit der Steuerungsvorrichtung (14) verbunden ist.

5. Vorrichtung nach Anspruch 4, **dadurch gekennzeichnet, dass** sie zwei Triebstangen (17) beinhaltet, wobei jede der beiden Triebstangen (17) durch ein erstes Triebstangenende (18) mit einem Ende des Arms (3), und durch ein zweites Triebstangenende (30) mit der Steuerungsvorrichtung (14) verbunden ist.

6. Einheit zur Handhabung einer Kunststoffmaterial-Spritzgussform, umfassend:
- Eine Vorrichtung zur Handhabung (1) nach einem der Ansprüche 1 bis 5, und
- ein an einer Form zu befestigendes Element (2, 2').

7. Einheit nach Anspruch 6, **dadurch gekennzeichnet, dass** das an einer Form zu befestigende Element (2, 2') ein Klotz (2, 2') ist, der einen Befestigungsfuß (23; 23), der imstande ist, an der Form befestigt zu werden, einen Klotzkörper (20) und einen Klotzkopf (21) umfasst.

8. Einheit nach Anspruch 7, **dadurch gekennzeichnet, dass** der Klotzkopf (21) einen Kopfquerschnitt aufweist und der Körper (20) des Klotzes einen Körperquerschnitt aufweist, wobei der Kopfquerschnitt größer ist als Klotzkörperquerschnitt, sodass der Klotz einen Ansatz (24) zwischen dem Klotzkopf und dem Klotzkörper aufweist.

9. Einheit nach Anspruch 7 oder 8, **dadurch gekennzeichnet, dass** die Öffnung (9) der Basis (8) der Vorrichtung zur Handhabung eine Öffnungsform aufweist und dadurch, dass die Öffnungsform ergänzend zu der Form des Klotzkopfes (21) ist.

10. Installation für die Handhabung mindestens einer Kunststoffmaterial-Spritzgussform, **dadurch gekennzeichnet, dass** die eine Einheit nach einem der Ansprüche 6 bis 9, sowie eine Hebebühne beinhaltet.

11. Installation nach Anspruch 10, **dadurch gekennzeichnet, dass** das Anschlussorgan der Vorrichtung zur Handhabung auf der Hebebühne montiert ist.

12. Installation nach Anspruch 10 oder 11, **dadurch gekennzeichnet, dass** die Hebebühne ein Laufkran ist.

## Claims

1. Handling device for moulds intended notably for plastic parts injection comprising:
- a connecting piece (3) designed to be connected to a lifting platform,
- a gripping base (8) designed to grasp onto an element (2, 2') attached to a mould, said gripping base (8) comprising:
∘ a central opening (9) designed to house said element (2, 2') attached to a mould and
∘ a locking device (10, 11), designed to lock the position of said element (2, 2') in the gripping base (8) with the locking device (10, 11) being designed to adopt a locking and an unlocking position,
- and a control device (14) to control the movement of the locking device (10, 11) from the locking to the unlocking position,
with the system comprising two partitions fixed on either side of said gripping base, each one possessing an oblong opening, with the two oblong openings opposite one another,
and said connecting piece (3) consisting of a transverse arm which passes through the oblong openings which is mobile and moves between an initial position and a second position in said oblong openings,
**characterised by** the fact that this locking device (10, 11) comprises at least two elements (11) forming a jaw, with said elements (11) being mounted in a mobile position to move between:
- the locking position according to which the mobile elements (11) are positioned close to one another and
the unlocking position in which the mobile elements (11) are separated from one another
and that each of said elements, of which there are at least two (11) forming a jaw, presents a sloping section (12) designed to slide due to gravity on an internal sloping section (13) in the gripping base of the device.

2. Device according to claim 1 **characterised by** the fact that
- said control device (14) is mobile and moves between an initial position and a second position,
- the connecting piece (3) is linked mechanically to the control device (14),
- and that said initial position is associated with the locking position of the locking device and said second position is associated with the unlocking position of the locking device.

3. Device according to claim 1 or 2 **characterised by** the fact that each of said elements (11) forming a jaw is connected to the control device (14) by means of a rod (34).

4. Device according to one of the previous claims **characterised by** the fact that it comprises at least one connecting rod (17) consisting of a first connecting rod end (18) and a second connecting rod end (30), with said first connecting rod end (18) being connected to said arm (3) and said second connecting rod end (30) being connected to the control device (14).

5. Device according to claim 4 **characterised by** the fact that it comprises two connecting rods (17) with each of said connecting rods (17) being connected by a first connecting rod end (18) to one end of said arm (3) and by a second connecting rod end (30) to the control device (14).

6. Handling system for moulds intended notably for plastic parts injection comprising:
- a handling device (1) according to one of the claims 1 to 5 and
- an element (2, 2') to be attached to a mould.

7. System according to claim 6 **characterised by** the fact that said element (2, 2') to be attached to a mould is a block (2, 2') comprising an attachment foot (23 ; 23) designed to be attached to said mould, a block body (20) and a block head (21).

8. System according to claim 7 **characterised by** the fact that the block head (21) presents a transverse head section and the body (20) of said block presents a transverse body section with the transverse head section being larger than the transverse body section so that the block presents a shoulder section (24) between the block head and the block body.

9. System according to claim 7 or 8 **characterised by** the fact that the opening (9) of the base (8) of the handling device presents an opening of a certain shape and this opening shape complements the shape of said block head (21).

10. Installation for the handling of at least one plastic material injection mould **characterised by** the fact that it comprises a system according to any one of the claims 6 to 9 and a lifting platform.

11. Installation according to claim 10 **characterised by** the fact that said connecting piece in the handling device is assembled on said lifting platform.

12. Installation according to claim 10 or 11 **characterised by** the fact that the lifting platform is an overhead crane.
